## Europäisches Patentamt
## European Patent Office
## Office européen des brevets

(19)

(11) Veröffentlichungsnummer: **0 324 043 B1**

(12) ## EUROPÄISCHE PATENTSCHRIFT

(45) Veröffentlichungstag der Patentschrift: **04.09.91**

(51) Int. Cl.⁵: **F23L 15/04, F23D 14/66**

(21) Anmeldenummer: **88100498.0**

(22) Anmeldetag: **15.01.88**

(54) **Industriebrenner mit rekuperativer Luftvorwärmung, insbesondere zur Beheizung von Ofenräumen von Industrieöfen.**

(43) Veröffentlichungstag der Anmeldung:
**19.07.89 Patentblatt 89/29**

(45) Bekanntmachung des Hinweises auf die Patenterteilung:
**04.09.91 Patentblatt 91/36**

(84) Benannte Vertragsstaaten:
**AT BE CH DE ES FR GB IT LI NL SE**

(56) Entgegenhaltungen:
**EP-A- 0 012 308**
**DE-A- 3 422 229**

**PATENT ABSTRACTS OF JAPAN, Band 9, Nr. 268 (M-424)[1991], 25. Oktober 1985; & JP-A-60 114 616 (KAWASAKI JUKOGYO K.K.) 21-06-1985**

(73) Patentinhaber: **WS Wärmeprozesstechnik GmbH**
**Dornierstrasse 14**
**W-7253 Renningen 1(DE)**

(72) Erfinder: **Wünning Joachim Dr.Ing.**
**Berghalde 20**
**7250 Leonberg(DE)**

(74) Vertreter: **Rüger, Rudolf, Dr.-Ing. et al**
**Patentanwälte Dr.-Ing. R. Rüger Dipl.-Ing. H.P. Barthelt Webergasse 3 Postfach 348**
**W-7300 Esslingen/Neckar(DE)**

Rank Xerox (UK) Business Services

## Beschreibung

Die Erfindung betrifft einen Industriebrenner mit rekuperativer Luftvorwärmung, insbesondere zur Beheizung von Ofenräumen von Industrieöfen, gemäß dem Oberbegriff des Patentanspruchs 1 oder 2.

Ein Industriebrenner mit diesen Merkmalen ist aus der DE-C-34 22 229 bekannt. Die Anordnung ist dabei derart getroffen, daß von der in dem Rekuperator vorgewärmten Verbrennungsluft ein Teil, die sogenannte Primärluft, in der Brennkammer mit dem Brennstoff vermischt wird, wobei die bei der unvollständigen Verbrennung des Brennstoffes in der Brennkammer entstehenden heißen Abgase mit hoher Geschwindigkeit aus der Strahldüse ausströmen. Aus einer die Brennkammer umgebenden, mit dem Rekuperator in Verbindung stehenden Restluftkammer tritt die zur Restverbrennung erforderliche vorgewärmte Restluftmenge über rings um den Auslaß der Brennkammer angeordnete Düsenöffnungen in Gestalt von Restluftstrahlen mit hoher Geschwindigkeit aus. Dadurch wird eine zweistufige Verbrennung erreicht, die zu niedrigen $NO_x$-Anteilen in den Verbrennungsabgasen und damit zu einer entsprechend geringen Umweltbelastung führt. Der im Gegenstrom betriebene Rekuperator besteht aus drei koaxial ineinandergesetzten Stahlrohren, von denen das mittlere die Wärmeaustauschfläche bildet und mit dem innen- sowie dem außenliegenden Rohr im Querschnitt ringförmige, koaxiale Kanäle begrenzt, die von der zu erwärmenden Verbrennungsluft bzw. den heißen Abgasen durchströmt sind. Zur Verbesserung des Wärmeübergangs ist das mittlere Rohr mit Rippen bestückt, die in die beiden Ringkanäle ragen.

Da die Länge eines solchen Rekuperators aus konstruktiven Gründen meist begrenzt ist, kann die Wärmeaustauschfläche nur proportional mit dem Durchmesser vergrößert werden. Das bedeutet, daß hohe Leistungen nur mit großen Rekuperatordurchmessern zu erreichen sind. Mit größer werdendem Verhältnis von Innen- zu Außendurchmesser ergeben sich aber u.a. deshalb Probleme, weil die auf dem mittleren Rohr sitzenden Rippen wegen ihres Wirkungsgrades eine bestimmte radiale Länge nicht überschreiten dürfen.

Die Ausbildung der Brennkammer und der Strahldüse aus keramischem Material ergibt zwar im Vergleich zu Industriebrennern mit aus Stahl hergestellter Brennkammer und Strahldüse eine wesentliche Verbesserung der Verschleißfestigkeit dieser Teile, insbesondere beim Betrieb mit hohen Temperaturen, doch erfordert die im wesentlichen luft- und gasdichte Verbindung der keramischen Brennkammer mit dem aus Stahl bestehenden Rekuperator einen beträchtlichen konstruktiven Aufwand. Wegen der unterschiedlichen thermischen Ausdehnungskoeffizienten von keramischem Material und Stahl müssen nämlich besondere Vorkehrungen getroffen werden, um das Auftreten von thermischen Spannungen, insbesondere auch in der Wandung der bruchgefährdeten keramischen Brennkammer, zu verhüten. Darüber hinaus können korrosive Bestandteile in den den Rekuperator durchströmenden Abgasen zu Verschleißproblemen in dem aus Stahl bestehenden Rekuperator führen, wie auch Vorsorge getroffen werden muß, daß die Abgastemperatur mit Rücksicht auf die Wärmebeständigkeit von Stahl einen Wert von ca. 1100° C nicht übersteigt.

Für hohe Gastemperaturen ist demgegenüber ein aus der US-A-4126 178 bekannter keramischer Wärmetauscher geeignet, der zum Einsatz als Rekuperator für Gasturbinen oder Sterling-Motoren bestimmt ist und im wesentlichen aus einem stranggepreßten, monolithischen, keramischen Wabenkörper besteht, welcher eine Matrix dünner Wände aufweist, durch die eine Vielzahl im wesentlichen paralleler, zwischen einander gegenüberliegenden Stirnseiten des Körpers durchgehender Zellen begrenzt sind. Diese Zellen bilden Strömungskanäle für im Gegenstrom geführte wärmeaustauschende Medien; sie können endseitig gruppenweise verschlossen und dafür seitlich in der Nähe der verschlossenen Stirnseiten geöffnet sein, so daß sich entsprechend den jeweiligen Einsatzbedingungen wahlweise an den Stirnseiten und/oder im Bereiche von Seitenflächen des Wabenkörpers Ein- und Austrittsöffnungen für die Wärmeaustauschmedien ergeben, welche gegebenenfalls mit entsprechenden Mediumszu- und -abführeinrichtungen in Verbindung stehen. Es ist zwar erwähnt, daß ein solcher keramischer Wabenkörper auch als Wärmeaustauscher oder Nachbrenner zur Verringerung des Heizenergieaufwandes bei bestimmten Industrieöfen Verwendung finden kann, doch fehlen insoweit alle Hinweise auf die konstruktive Gestaltung. Wegen der durchgehenden Wabenstruktur des im Querschnitt rechteckigen Körpers können in dem Körper selbst keine Verbrennungsvorgänge stattfinden.

Schließlich ist noch aus der DE-C-28 05 817 ein rekuperativer Wärmeübertrager aus keramischem Material bekannt, der in Gestalt eines stranggepreßten, hohlzylindrischen Körpers ausgebildet ist, in dessen Wand rings um die Längsachse verteilt nebeneinanderliegend angeordnete Kanäle verlaufen, die im Gegenstrom von Wärmeaustauschmedien durchströmt sind. Die im wesentlichen schlitzartigen, axial geführten Strömungskanäle sind abwechselnd radial gegeneinander versetzt, wobei zur Bildung von Zu- und Abströmöffnungen ein Teil zumindest der Innen- oder Außenmantelwand des hohlzylindrischen Körpers in an den Stirnseiten gelegenen Bereichen soweit abgesetzt ist, daß jeweils die in den abgesetzten Bereich ragenden Strömungskanäle dort geöffnet sind. Bei stirnseitigem Verschluß der axial geführten Strömungskanäle werden sowohl die der Rotationsachse nahegelegene innere Mantelwand als auch die äußere Mantelwand zur Bildung von Zu- und Abströmöffnungen abgesetzt, wobei der keramische Wärmeübertrager dann so an Zu- und Ableitungen für die im Wärmeaustausch stehenden Medien anschließbar ist, daß die beiden Medien die Wärmetauschermatrix axial durchströmen und in radialer Richtung zu- und abgeführt werden.

Ein im Grundsatz ähnlicher keramischer Wärmetauscher hohlzylindrischer Bauart ist auch aus der EP-A-0025 980 bekannt.

Diese Wärmetauscher dienen als selbstständige Baueinheiten lediglich dem Wärmeaustausch zwischen zwei sie durchströmenden gasförmigen Medien, die über die zugeordneten Zu- und Abführeinrichtungen vorzugsweise gesammelt, zu- bzw. abgeführt werden.

Aufgabe der Erfindung ist es demgegenüber, einen Industriebrenner, insbesondere zur Beheizung von Ofenräumen von Industrieöfen zu schaffen, der sich durch einen besonders einfachen, betriebssicheren Aufbau auszeichnet, mit geringem Aufwand herstellbar ist und bei hohem thermischem Wirkungsgrad auch für den Einsatz bei hohen Temperaturen und/oder beim Auftraten von aggressive Bestandteile enthaltenden Verbrennungsabgasen geeignet ist.

Zur Lösung dieser Aufgabe ist der eingangs genannte Industriebrenner erfindungsgemäß durch die Merkmale des Patentanspruchs 1 oder alternativ des Patentanspruchs 2 gekennzeichnet.

Mit der zumindest teilweise im Innenraum des gleichzeitig den Rekuperator bildenden keramischen, hohlzylindrischen Körpers liegenden und/oder an dessen eine Stirnseite anschließend angeordnete Brennkammer ergibt sich eine sehr einfache Brennerkonstruktion aus leicht herstellbaren Teilen. Für den hohlzylindrischen Körper kann keramischer Werkstoff mit guter Wärmeleitfähigkeit und hoher Temperaturwechselbeständigkeit verwendet werden; die Herstellung kann in besonders einfacher Weise durch ein Strangpreßverfahren erfolgen. das keramische Material ist weitgehend beständig gegen in den Verbrennungsabgasen enthaltene aggressive Bestandteile, mit dem Ergebnis, daß der ganze Brenner sich durch eine hohe Verschleißfestigkeit auszeichnet. Gleichzeitig kann er erforderlichenfalls auch mit hohen Gastemperaturen arbeiten.

Die Brennkammer kann in einer einfachen Ausführungsform als Abschnitt des Hohlraumes des hohlzylindrischen Körpers unmittelbar von dessen innerer Mantelwand seitlich begrenzt sein. Alternativ kann die Anordnung aber auch derart getroffen sein, daß die Brennkammer wenigstens ein an den hohlzylindrischen Körper angesetztes ring- oder topfförmiges Brennkammerelement aufweist, das dann gegebenenfalls aus einem anderen Keramikmaterial besteht wie der hohlzylindrische Körper. Auf diese Weise besteht die Möglichkeit für das Brennkammerelement bspw. ein höherwertiges Keramikmaterial einzusetzen als für den stranggepreßten hohlzylindrischen Körper. Außerdem kann die Strahldüse auch an diesem Brennkammerelement ausgebildet oder mit diesem verbunden sein.

Abhängig von der jeweils erforderlichen Gasaustrittsgeschwindigkeit aus der Strahldüse und dem Innendurchmesser des hohlzylindrischen Körpers kann entweder dessen zylindrische innere Mantelwand mit ihrer stirnseitigen Mündung unmittelbar die Strahldüse bilden, oder aber es kann mit dem hohlzylindrischen Körper wenigstens ein die Strahldüse bildender keramischer Düsenkörper verbunden sein. Dieser Düsenkörper kann mit Vorteil als ein gasaustrittsseitig in den Hohlraum des hohlzylindrischen Körpers eingesetzter Düsenring ausgebildet sein, dessen wirksame Gasdurchtrittsfläche kleiner als die des Hohlraumes ist, so daß durch die von dem Düsenring bewirkte Einschnürung die jeweils erforderliche Erhöhung der Gasaustrittsgeschwindigkeit erzielt wird. Falls eine Strahlaufteilung zweckmäßig ist, kann auch ein Düsenkörper Verwendung finden, der mehrere getrennte Düsenöffnungen aufweist.

Um den $NO_x$-Anteil in den Verbrennungsabgasen abzusenken und damit einen umweltfreundlichen Brennerbetrieb zu gewährleisten, ist es bekannt, mit einer sogenannten zweistufigen Verbrennung zu arbeiten. Diese kann bei dem neuen Industriebrenner in besonders einfacher Weise dadurch ermöglicht werden, daß Verbrennungsluft führende Kanäle des hohlzylindrischen Körpers mit in der Nähe der Strahldüse liegenden Luftauslässen verbunden sind, die in einer bevorzugten Ausführungsform in der Nähe der der Strahldüse zugeordneten Stirnwand des hohlzylindrischen Körpers liegen. Die Aufteilung der in dem Rekuperatorteil des hohlzylindrischen Körpers erwärmten Verbrennungsluft in eine in die in dem Hohlraum des hohlzylindrischen Körpers angeordnete Brennkammer eingeleitete Primärluftmenge und in eine vorzugsweise stirnseitig aus dem hohlzylindrischen Körper austretende Restluftmenge kann damit in einfacher Weise dadurch geschehen, daß in dem hohlzylindrischen Körper jeweils ein entsprechender Teil der Verbrennungsluft führenden Kanäle auf der der Strahldüse zugeordneten Stirnseite verschlossen und dafür zu dem Hohlraum hin geöffnet wird, während der andere Teil der Verbrennungsluft führenden Kanäle frei in der Stirnfläche mündet, ohne mit dem Hohlraum des hohlzylindrischen Körpers in Verbindung zu stehen.

Die Brennkammer ist mit Vorteil auf der der Strahldüse abgewandten Stirnseite durch wenigstens ein in den Hohlraum des hohlzylindrischen Körpers eingesetztes Verschlußteil abgeschlossen, das Einrichtungen zumindest für die Brennstoffzufuhr aufweist. Für den Fall, daß die innere Mantelwand unmittelbar die Brennkammer seitlich umschließt, kann zu diesem Zweck in den Hohlraum ein Stopfen eingefügt sein. Ist in den Hohlraum ein eigenes Brennkammerelement eingefügt, so kann entweder ebenfalls ein solcher Stopfen oder aber ein eigenes Abschlußelement, bspw. in Gestalt einer Platte, Verwendung finden, das auf das Brennkammerelement aufgesetzt ist.

Die in der Wand des hohlzylindrischen Körpers axial verlaufend ausgebildeten, nebeneinanderliegenden Strömungskanäle können an sich jede geeignete Profilgestalt aufweisen, wobei auch die Anordnung der Strömungskanäle den jeweiligen Erfordernissen auch des Strangpreßverfahrens, angepaßt werden kann. Als besonders zweckmäßig hat es sich aber erwiesen, wenn zumindest die Verbrennungsabgase und Verbrennungsluft führenden Kanäle in abwechselnd nebeneinanderliegenden Sektoren des hohlzylindrischen Körpers verlaufend angeordnet sind. Damit können die die Strömungskanäle voneinander trennenden Wände sehr dünn und gleichmäßig gestaltet werden, so daß sich ein guter thermischer Wirkungsgrad des Rekuperators ergibt.

Alle Verbrennungsabgase und alle Verbrennungsluft führenden Kanäle weisen zweckmäßigerweise jeweils gleichen hydraulischen Durchmesser auf, so daß über die gesamte Querschnittsfläche des hohlzylindrischen Körpers eine gleichmäßige Verteilung des Gas- bzw. Luftdurchsatzes und damit gleichmäßige Wärmeaustauschverhältnisse erzielt werden. Die praktische Erfahrung hat gezeigt, daß es vorteilhaft ist, wenn der hydraulische Durchmesser in dem Bereich von 2 bis 10 mm liegt.

Insbesondere bei größeren Abmessungen kann es schwierig oder unwirtschaftlich werden, den keramischen, hohlzylindrischen Körper als einstückiges Bauteil herzustellen. Hierbei ist es dann zweckmäßig, wenn der hohlzylindrische Körper aus wenigstens zwei gleichartigen Hohlzylindersektoren zusammengesetzt ist, von denen jeder wiederum im Strangpreßverfahren erzeugt werden kann.

Die Brennstoffzuführung zu der Brennkammer erfolgt in geeigneter Weise, wobei der Hohlraum des hohlzylindrischen Körpers sich für die Unterbringung der Brennstoffzuführeinrichtungen anbietet. Um den Industriebrenner an unterschiedliche Einsatzbedingungen anpassen zu können, kann es zweckmäßig sein, die Anordnung derart zu treffen, daß in dem Hohlraum die Brennstoffzuführung koaxial zu der Längsachse des hohlzylindrischen Körpers angeordnet ist und ein axial verschiebbares Zufuhrelement aufweist, das zusammen mit der Strahldüse oder Ventilsitzmitteln ein verstellbares Ventil für die in die Strahldüse einströmenden Gase bildet. In Weiterbildung dieses Gedankens kann das Zufuhrelement auch mit einer Feder-Membrananordnung verbunden sein, durch deren Federmittel das Zufuhrelement auf die Strahldüse bzw. die Ventilsitzmittel hin vorgespannt ist, wobei die Membran einerseits mit der Atmosphäre und andererseits mit der Brennkammer in Verbindung steht, so daß der Brennkammerdruck unabhängig von der Beaufschlagung konstant gehalten wird.

Unabhängig von der jeweiligen Ausführungsform des Industriebrenners ist es in der Regel von Vorteil, wenn der hohlzylindrische Körper über zumindest einen Teil seiner Länge mit einer wärmeisolierenden Umhüllung versehen ist, die Wärmeverluste nach außen zu verhindert. Mit Rücksicht auf eine einfache Montage ist es zweckmäßig, wenn der hohlzylindrische Körper - gegebenenfalls zusammen mit seiner wärmeisolierenden Umhüllung - in ein teilbares Gehäuse eingesetzt ist, das mit den jeweiligen Kanälen in Verbindung stehende Anschlußeinrichtungen für die Verbrennungsabgase bzw. die Verbrennungsluft aufweist und aus dem er in einer von der Strahldüse wegweisenden Richtung herausnehmbar ist.

Endlich kann für Einsatzzwecke, bei denen es auf eine hohe Wärmeleistung ankommt, die Anordnung auch noch derart getroffen sein, daß einer der beschriebenen neuen Industriebrenner mit wenigstens einem zweiten Industriebrenner zu einer Brennereinheit zusammengefaßt ist, deren hohlzylindrische Körper in einem gemeinsamen Gehäuse angeordnet sind, das gegebenenfalls ebenfalls teilbar ist und eine Demontage der hohlzylindrischen Körper durch einfaches Herausziehen erlaubt.

In der Zeichnung sind Ausführungsbeispiele des Gegenstandes der Erfindung dargestellt. Es zeigen:

Fig. 1 — einen Industriebrenner gemäß der Erfindung, in einer ersten Ausführungsform, geschnitten längs der Linie I-I der Fig. 4, in einer Seitenansicht,

Fig. 2 bis 4 — den Industriebrenner nach Fig. 1, geschnitten längs der Linie II-II bzw. III-III bzw. IV-IV der Fig. 1, jeweils in einer Draufsicht,

Fig. 5 — einen Industriebrenner gemäß der Erfindung, in einer zweiten abgewandelten Ausführungsform und in einer Schnittdarstellung entsprechend Fig. 1,

Fig. 6 — einen Industriebrenner gemäß der Erfindung, in einer dritten abgewandelten Ausführungsform und in einer Schnittdarstellung entsprechend Fig. 1,

Fig. 7 den keramischen hohlzylindrischen Körper eines der Industriebrenner nach den Fig. 1 bis 6, in einer abgewandelten Ausführungsform und in einer Schnittdarstellung entsprechend Fig. 4,

Fig. 8 einen keramischen hohlzylindrischen Körper eines der Industriebrenner nach den Fig. 1 bis 6, im Querschnitt, in einer Teildarstellung und in einer Draufsicht sowie in einem anderen Maßstab,

Fig. 9 den hohlzylindrischen Körper eines der Industriebrenner nach Fig. 1 bis 6, in einer weiteren abgewandelten Ausführungsform, im axialen Schnitt, in einer Seitenansicht,

Fig.10 den hohlzylindrischen Körper nach Fig. 9, geschnitten längs der Linie X-X der Fig. 9, in einer Draufsicht und in einer Teildarstellung,

Fig.11 eine aus drei Industriebrennern nach Fig. 1 bis 6 zusammengesetzte Brennereinheit im Querschnitt durch die hohlzylindrischen Körper, in der Draufsicht und in schematischer Darstellung, und

Fig.12 einen Industriebrenner gemäß der Erfindung in einer weiteren abgewandelten Ausführungsform, in einer Schnittdarstellung entsprechend Fig. 1 und in einer Teildarstellung.

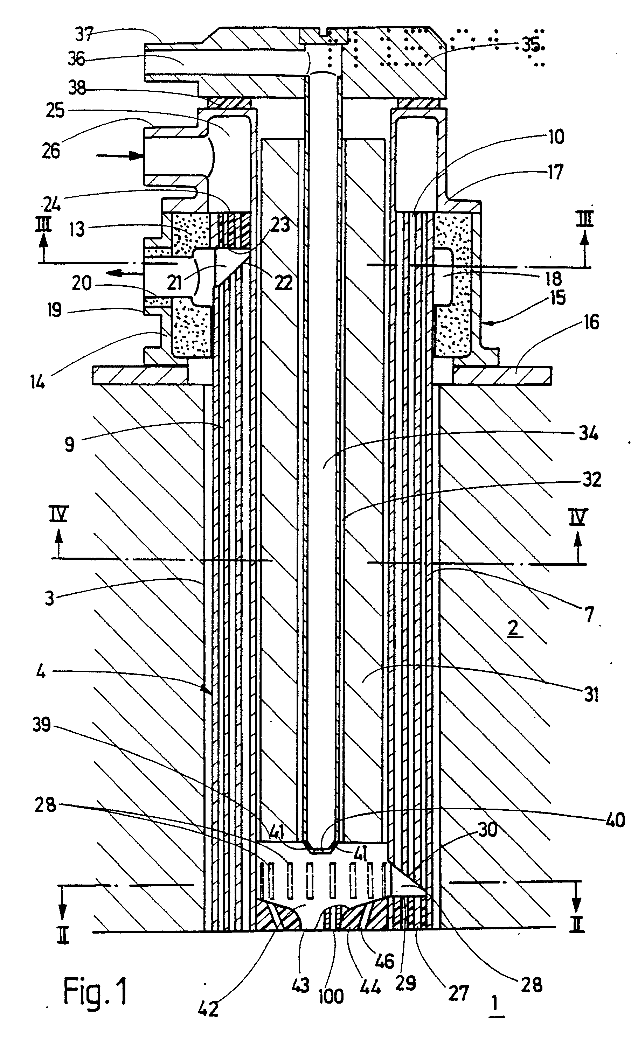

Der in der Zeichnung in mehreren Ausführungsbeispielen dargestellte Industriebrenner ist zur Beheizung mit gasförmigen oder flüssigen Brennstoffen eingerichtet und dient zur Beheizung des Ofenraums 1 eines Industrieofens, dessen Wandung bei 2 dargestellt ist und eine durchgehende Öffnung 3 enthält, in die der Brenner eingesetzt ist (Fig. 1,5,6).

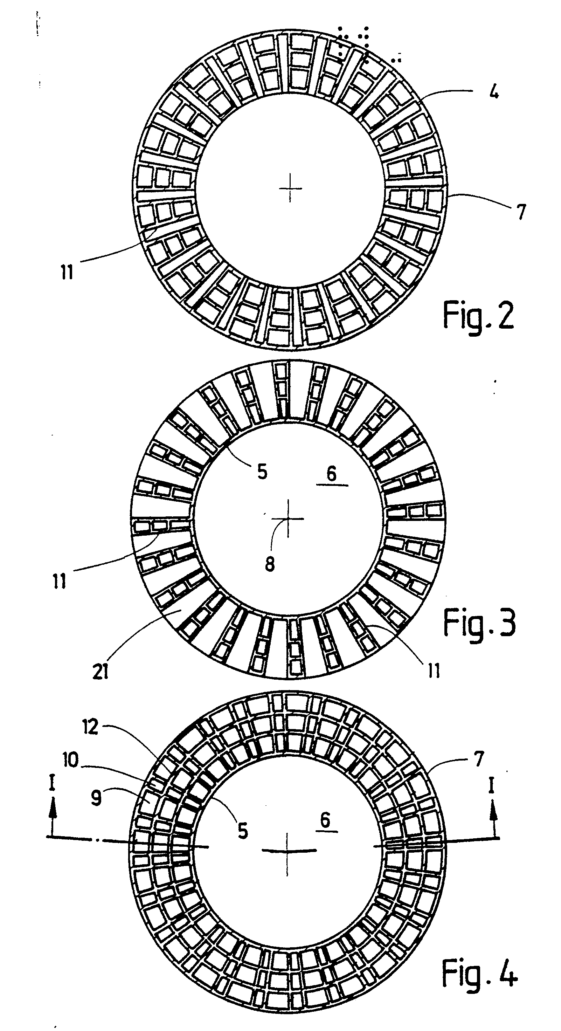

Der Industriebrenner arbeitet mit rekuperativer Luftvorwärmung und weist einen länglichen, hohlzylindrischen Körper 4 auf, der aus einem keramischen Werkstoff mit guter Wärmeleitfähigkeit und hoher Temperaturwechselbeständigkeit im Strangpreßverfahren hergestellt wurde. Diese keramische hohlzylindrische Körper 4 umschließt mit einer inneren Mantelwand 5 (Fig. 3,4) einen zylindrischen Hohlraum 6, während er nach außen hin längs des Umfanges durch eine koaxiale,durchgehende, glatte, äußere Mantelwand 7 abgeschlossen ist. In der ringförmigen Wandung des hohlzylindrischen Körpers 4 sind rings um die Längsachse 8 verteilt, nebeneinanderliegend angeordnete, axial verlaufende, parallele Kanäle 9,10 ausgebildet, die bei den in den Fig. 2 bis 4 und 7 dargestellten Ausführungsformen jeweils durch im wesentlichen radiale Wandungen 11 und zu der Längsachse 8 koaxiale, ringförmige Wandungen 12 begrenzt sind, die auch durch ebene Wandungsteile ersetzt sein können. Durch die radialen Wände 11 ergibt sich eine im wesentlichen sektorförmige Unterteilung der ringförmigen Wandung des hohlzylindrischen Körpers 4, wobei die Kanäle 9,10 über die gesamte Länge des hohlzylindrischen Körpers 4 jeweils konstante Querschnittsgestalt aufweisen. Die Stärke der benachbarte Kanäle 9,10 voneinander trennenden Wände 11, 12 beträgt zwischen 2 und 20 mm, vorzugsweise etwa 5 bis 10 mm, wobei, abhängig von den Abmessungen des hohlzylindrischen Körpers und den Einsatzbedingungen des Industriebrenners, naturgemäß auch andere Wandstärken gewählt werden können.

Der hohlzylindrische Körper 4 ist an seinem einen Ende mit einer wärmeisolierenden Umhüllung in Gestalt eines etwa scheibenförmigen Keramikkörpers 13 umgeben, der mit der äußeren Mantelwand 7 temperaturbeständig verkittet oder sonstwie verbunden ist. Der Keramikkörper 13 ist seinerseits in das ringförmige Unterteil 14 eines teilbaren Metallgehäuses 15 (Fig. 1) eingesetzt, das an dem metallischen Außenmantel 16 des Industrieofens befestigt ist. Mit dem Gehäuseunterteil 14 ist mit querverlaufender Trennfuge ein ebenfalls metallisches Gehäuseoberteil 17 gasdicht verbunden, das den Keramikkörper 13 axial fixiert. Nach Abnahme des Gehäuseoberteils 17 können der Keramikkörper 13 und der damit verbundene hohlzylindrische Körper 4 und damit der ganze Industriebrenner aus dem Gehäuseunterteil 14 herausgezogen werden, so daß sehr einfache Montageverhältnisse gewährleistet sind.

In dem Keramikkörper 13 ist ein die Mantelwand 7 umgebender Ringkanal 18 ausgebildet, der mit einem Verbrennungsabgas-Abfurstutzen 19 in Verbindung steht, welcher seinerseits bei 20 einen Stutzen des Keramikkörpers 13 umschließt.

In dem innerhalb des Ringkanales 18 liegenden Umfangsbereich des hohlzylindrischen Körpers 4 sind, ausgehend von dessen äußerer Mantelwand 7, Schlitze 21 eingearbeitet, beispielsweise eingeschnitten, die bis zu der inneren Mantelwand 5 durchgehen, ohne diese zu verletzen und die eine etwa dreieckförmige Profilgestalt mit einer etwa waagerecht liegenden oberen Seite 23 aufweisen. Wie aus Fig. 3 zu entnehmen, sind die Schlitze 21 längs des Umfanges des hohlzylindrischen Körpers 4 mit gleicher Teilung derart verteilt angeordnet, daß sie in gleichmäßig verteilten Sektoren liegen, von denen jeder drei radial aneinander anschließende Kanäle 9 umfaßt. In jedem der seitlich durch zwei glatte Wände 11 begrenzten sektorförmigen Schlitze 21 münden somit unten die zugeordneten drei Kanäle 9, die damit mit dem Ringkanal 18 in Verbindung stehen. Durch die zu der benachbarten Stirnfläche des hohlzylindrischen Körpers 4 hin schräg verlaufende untere Schlitzberandung 22 ist erreicht, daß die Mündungen der Kanäle 9 im Bereiche der Schlitzunterseite axial gegeneinander versetzt sind, so daß sich günstige Ausströmverhältnisse ergeben.

Im Bereiche der anderen im wesentlichen in einer horizontalen Ebene liegenden Schlitzseite bei 23 sind die Kanäle 9 bei 24 verschlossen,mit dem Ergebnis, daß über den Abfuhrstutzen 19 in Pfeilrichtung der Fig. 1 abgeführte Verbrennungsabgase die sektorförmig verteilt angeordneten Kanäle 9 gleichmäßig beaufschlagen und diese, bezogen auf Fig. 1, nach oben zu gerichtet durchströmen, während der hohlzylindrische Körper 4 für die Verbrennungsabgase auf der den Schlitzen 21 benachbarten Stirnseite gasdicht verschlcssen ist. Auf der gegenüberliegenden Stirnseite sind die Kanäle 9 offen, so daß die Verbrennungs-Abgase aus dem Ofenraum 1 frei einströmen können.

Anschließend an die Stirnfläche des hohlzylindrischen Körpers 4 ist in dem Gehäuseoberteil 17 ein zweiter Ringkanal 25 ausgebildet, der mit einem Verbrennungsluft-Zufuhrstutzen 26 verbunden ist. In den zweiten Ringkanal 25 münden die anderen Kanäle 10, die im Gegensatz zu den Kanälen 9 an dieser Stirnseite des hohlzylindrischen Körpers 4 unverschlossen sind.

Im Bereiche der gegenüberliegenden Stirnseite des hohlzylindrischen Körpers 4 sind diese mit Verbrennungsluft beaufschlagten Kanäle 10 bei 27 gasdicht verschlossen. Gleichzeitig sind aber, ausgehend von der inneren Mantelwand 5 in dem hohlzylindrischen Körper 4 ringsum in gleichmäßiger Verteilung den Schlitzen 21 entsprechende Schlitze 28 angeordnet, die sich in der aus Fig. 2 ersichtlichen Weise bis zu der äußeren Mantelwand 4 erstrecken, ohne diese zu verletzen.

Die somit radial gegenüber den Schlitzen 21 versetzten sektorförmigen Schlitze 28 sind seitlich ebenfalls durch zwei glatte Wände 11 begrenzt und bilden in dem Hohlraum 6 mündende Auslaßöffnungen für die die Kanäle 10 durchströmende Verbrennungsluft. Jeder der Schlitze 28 ist auf der der Stirnwand des hohlzylindrischen Körpers benachbarten Seite bei 29 im wesentlichen in einer Horizontalebene verlaufend ausgebildet, während er auf der gegenüberliegenden Seite bei 30, bezogen auf Fig. 1 nach oben zu abgeschrägt ist. Auf diese Weise wird erreicht, daß die Mündungen der in jedem Ringsektor radial benachbarten drei Kanäle 10 in dem zugeordneten Schlitz 28 axial versetzt sind, um damit günstige Abströmverhältnisse für die Verbrennungsluft zu gewährleisten.

In den Hohlraum 6 des hohlzylindrischen Körpers 4 ist ein ebenfalls im wesentlichen ringzylindrischer keramischer Stopfen 31 eingesetzt, der eine durchgehende zentrische Bohrung 32 aufweist, durch die eine koaxiale Brennstofflanze 34 verläuft. Die Brennstofflanze 34 ist einenends abgedichtet an eine Kopfplatte 35 angeschlossen, die einen mit der Brennstofflanze 34 verbundenen Brennstoffzufuhrkanal 36 enthält, der durch einen Brennstoffzufuhrstutzen 37 verläuft. Über einen elastischen Dichtring 38 ist das Kopfstück 35 mit dem Metallgehäuse 15 verbunden.

Die axiale Länge des Stopfens 31 ist derart bemessen, daß dieser mit seiner bezogen auf Fig. 1 unteren Stirnfläche 39 in einigem Abstand oberhalb der oberen Berandung der Verbrennungsluft-Auslaßschlitze 28 endet. Gleichzeitig ragt die bei 40 stirnseitig bis auf Brennstoffauslaßkanäle 41 verschlossene Brennstofflanze 34 etwas über die Stirnfläche 39 vor. Die Brennstoffauslaßkanäle 41 öffnen sich damit in eine von der Stirnfläche 39 begrenzte und unmittelbar von der inneren Mantelwand 5 umschlossene Brennkammer 42, in der die Verbrennungsluft-Auslaßschlitze 28 münden.

Auf der der Stirnfläche 39 gegenüberliegenden Seite steht die Brennkammer 42 mit einer zu der Längsachse 8 koaxialen Strahldüse 43 in Verbindung, die in einem mit entsprechender Profilgestalt ausgebildeten ringförmigen keramischen Düsenkörper 44 ausgebildet ist, welcher unterhalb der Verbrennungsluft-Auslaßschlitze 28 in den Innenraum 6 eingesetzt und mit der inneren Mantelwand 5 verbunden, beispielsweise verkittet ist.

Bei dem insoweit beschriebenen Industriebrenner bildet der keramische hohlzylindrische Körper 4 somit einerseits einen im Gegenstrom von den aus der Ofenkammer 1 abgezogenen heißen Verbrennungsabgasen und andererseits von der über den Zufuhrstutzen 26 zugeführten Verbrennungsluft durchströmten Rekuperator; andererseits enthält er in seinem Hohlraum 6 unmittelbar die Brennkammer 42, die bei der Ausführungsform nach Fig. 1 seitlich direkt von der inneren Mantelwand 5 umschlossen ist. Zusätzlich ist an dem hohlzylindrischen Körper 4 austrittsseitig noch die Strahldüse 43 angeordnet, die den austrittsseitigen Abschluß der Brennkammer 42 bildet. Auf diese Weise ist erreicht, daß sowohl der Rekuperator als auch die Brennkammer 42 und die Strahldüse 43, d.h. die hohen Temperaturen ausgesetzten Teile, nur von keramischen Wandteilen begrenzt sind.

Im Betrieb wird der aus den Brennstoffauslaßöffnungen 41 der Brennstofflanze 34 zerstäubt austretende Brennstoff in der Brennkammer 42 mit der in diese über die Verbrennungsluft-Auslaßschlitze 28 eintretenden Luft vermischt und gezündet; die entstehenden heißen Verbrennungsabgase strömen durch die Strahldüse 43 in die Ofenkammer 1 ein, wobei sie durch die durch den Düsenkörper 44 bewirkte Einschnürung des Strömungsweges auf eine hohe Strahlgeschwindigkeit beschleunigt werden.

In Fällen, in denen eine Strahlaufteilung wünschenswert ist, kann der Düsenkörper 44 auch mit verteilt angeordneten einzelnen Kanälen ausgebildet sein, wie sie in Fig. 1 bei 46 angedeutet sind. Dabei ist es auch möglich, die mittige Öffnung zu verschließen, so daß der Düsenkörper 4 die Gestalt einer Lochplatte annimmt.

Häufig ist es zur Absenkung des $NO_x$-Anteils in den Verbrennungsabgasen erwünscht, die Verbrennung zweistufig durchzuführen. Dazu ist es erforderlich, die über die Kanäle 9 zugeführte Verbrennungsluft in eine durch die Auslaßschlitze 28 in die Brennkammer 43 unmittelbar eingeführte Primärluftmenge und in eine Restluftmenge aufzuteilen, die in Gestalt von Restluftstrahlen dem aus der Strahldüse 43 austretenden Gasstrom beigemischt wird. Diese Aufteilung ist derart getroffen, daß mit der Primärluft lediglich eine Teilverbrennung des Brennstoffes innerhalb der Brennkammer 42 erfolgt und die restlose Nachverbrennung in dem aus der Strahldüse 43 austretenden Gasstrahl mittels der eingeblasenen Restluft geschieht.

Um diese zweistufige Verbrennung zu erzielen, wird eine Anzahl der Verbrennungsluft führenden Kanäle 10 auf der der Ofenkammer 1 zugewandten Stirnseite des hohlzylindrischen Körpers 4 offengelassen. Durch eine entsprechende Verteilung der Schlitze 28 wird erreicht, daß diese stirnseitig offenen Kanäle 10 mit der Brennkammer 42 nicht oder - in Sonderfällen - lediglich gedrosselt in Verbindung stehen. Dabei ist es grundsätzlich denkbar, in Fig. 1 beispielsweise jeden zweiten Verbrennungsluft-Auslaßschlitz 28 wegzulassen, so daß der entsprechende Kanal 9 stirnseitig bei 100 mündet oder aber die Tiefe der Schlitze 28 zu variieren, etwa derart, daß die radial innenliegenden Kanäle 9 in jedem Sektor in die Brennkammer 42 münden, während wenigstens ein radial außenliegender Kanal seine Mündung an der Stirnseite hat.

In diesem Zusammenhang ist zu erwähnen, daß die der Ofenkammer 1 zugewandte Stirnfläche des hohlzylindrischen Körpers 4 nicht nur, wie dargestellt, eben ausgebildet, sondern mit einer zweckentsprechenden Gestaltung, beispielsweise konkav oder konvex versehen werden kann, um beispielsweise die aus den stirnseitig offenen Kanälen 9 austretenden Restluftstrahlen etwas radial nach innen zu leiten oder günstigere Eintrittsverhältnisse für die Verbrennungsabgase in die Kanäle 9 zu erzielen.

Bei dem beschriebenen Ausführungsbeispiel sind in der aus den Fig. 2 bis 4 ersichtlichen Weise jeweils drei Verbrennungsabgase bzw. Verbrennungsluft führende Kanäle 9 bzw. 10 in einem sektorförmigen Abschnitt angeordnet, derart, daß Verbrennungsabgase und Verbrennungsluft führende Sektorbereiche über radiale Wände 11 voneinander getrennt abwechselnd nebeneinander angeordnet sind. Wegen der hohlzylindrischen Gestalt des Körpers 4 haben die in einem solchen Kreisringsektor liegenden drei Kanäle 9 bzw. 10 an sich eine etwas unterschiedliche Querschnittsgestalt. Die Anordnung ist aber derart getroffen, daß alle Kanäle 9 ebenso wie alle Kanäle 10 gleiche hydraulische Durchmesser $dn = 4 * F/U$ haben. Dies kann durch entsprechende Wahl der Durchmesser der Ringwandungen 12 und der Teilung der Wände 11 erzielt werden. Zweck dieser Maßnahme ist es, sicherzustellen, daß die zufuhrseitig jeweils mit dem gleichen Druck beaufschlagten Kanäle 9 bzw. 10 auch gleiche Medienströme führen, so daß sich gleichmäßige Wärmeaustauschverhältnisse in dem hohlzylindrischen Körper 4 an allen Stellen rings um die Längsachse ergeben. Der hydraulische Durchmesser für die Verbrennungsabgase führenden Kanäle 9 kann dabei durchaus unterschiedlich von jenem für die Verbrennungsluft führenden Kanäle 10 sein. Bei dem Ausführungsbeispiel nach den Fig. 1 bis 4 ist der hydraulische Durchmesser eines Kanales 10 etwa doppelt so groß wie jener eines Kanales 9. Der hydraulische Durchmesser $dn$ liegt mit Vorteil in dem Bereich von 2 bis 10 mm.

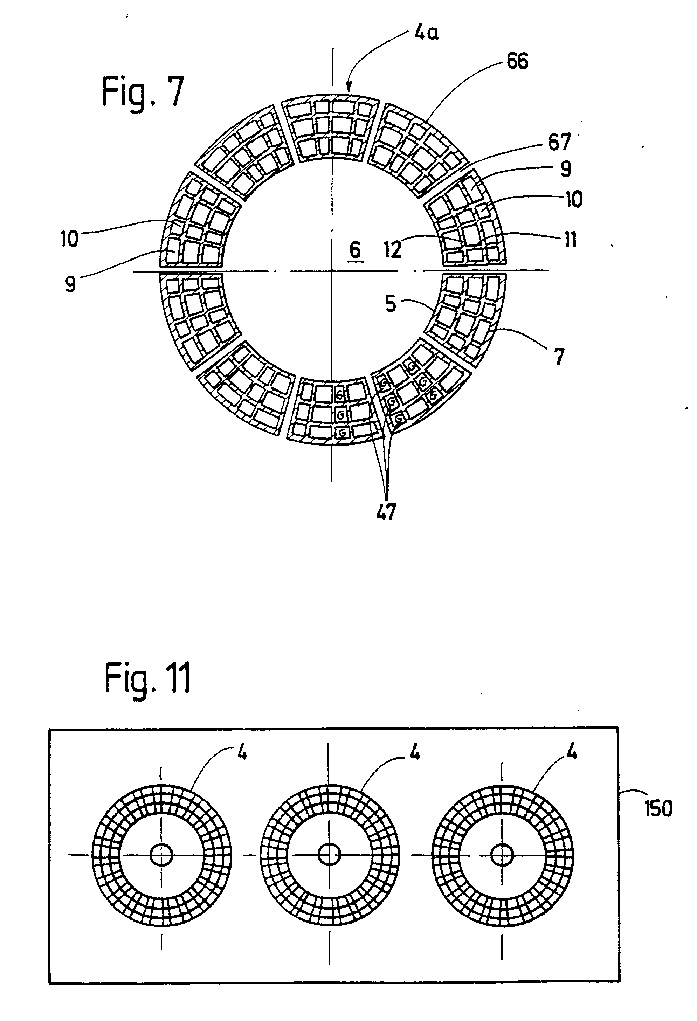

Um die Wärmeübertragungsverhältnisse zwischen den Verbrennungsabgasen und der Verbrennungsluft in dem als Rekuperator wirkenden Teil des hohlzylindrischen Körpers 4 zu verbessern, können zumindest auf der kalten Seite in den Kanälen 9 und/oder 10 Einbauten etwa in Gestalt von eingeschobenen Spiralen, Stäben od.dgl., wie sie in Fig. 7 bei 47 schematisch angedeutet sind, vorgesehen werden, die eine laminare Gasströmung verhindern und ein Aufreißen der Grenzschicht an den Kanalwandungen bewirken.

Außerdem ist es zweckmäßig, bei dem hohlzylindrischen Körper 4 das Verhältnis von Innen- zu Außendurchmesser $Di/DA$ zwischen 0,5 und 0,7 vorzugsweise bei 0,6 konstant zu halten. Bei gleicher axialer Länge und gleichgehaltenem hydraulischem Durchmesser der Kanäle 9, 10 nimmt dann die Wärmetauschfläche mit dem Quadrat des Außendurchmessers $DA$ zu. Es lassen sich also verhältnismäßig große Wärmetauschleistungen bei relativ kleinem Platzbedarf erzielen.

Wird der Industriebrenner mit Erdgas oder anderen leicht entflammbaren Brennstoffen betrieben, so müssen diese über die Brennstofflanze 34 zugeführt werden, die durch die Bohrung 32 des Stopfens 31 unmittelbar in die Brennkammer 42 führt. Der Bohrungsdurchmesser ist dabei größer als der Außendurchmesser der Brennstofflanze 34, wodurch eine Wärmeisolierung der Brennstofflanze 34 bewirkt und damit ein Cracken des durchströmenden Brennstoffes verhindert wird.

Wird ein solcher Industriebrenner aber mit einem Brennstoff betrieben, der eine Vorwärmung erlaubt, kann die Anordnung auch derart getroffen werden, daß einzelne der sonst der Verbrennungsluft zugeordneten und mit den die heißen Verbrennungsabgase führenden Kanälen 10 thermisch gekoppelten Kanäle 9 für die Brennstoffvorwärmung benutzt werden. In diesem Falle sind diesen Brennstoff-Vorwärmkanälen 9 eigene Brennstoffzuführeinrichtungen zugeordnet, die mit einem Ringkanal ähnlich dem Ringkanal 18 oder 25 arbeiten, mit dem sie über geeignet gelegte Schlitze ähnlich den Schlitzen 21 oder 28 in Verbindung stehen. Diese Brennstoff-Vorwärmkanäle 9 können dann durch entsprechende Auslaßöffnungen ähnlich den Schlitzen 28 unmittelbar in die Brennkammer 42 münden.

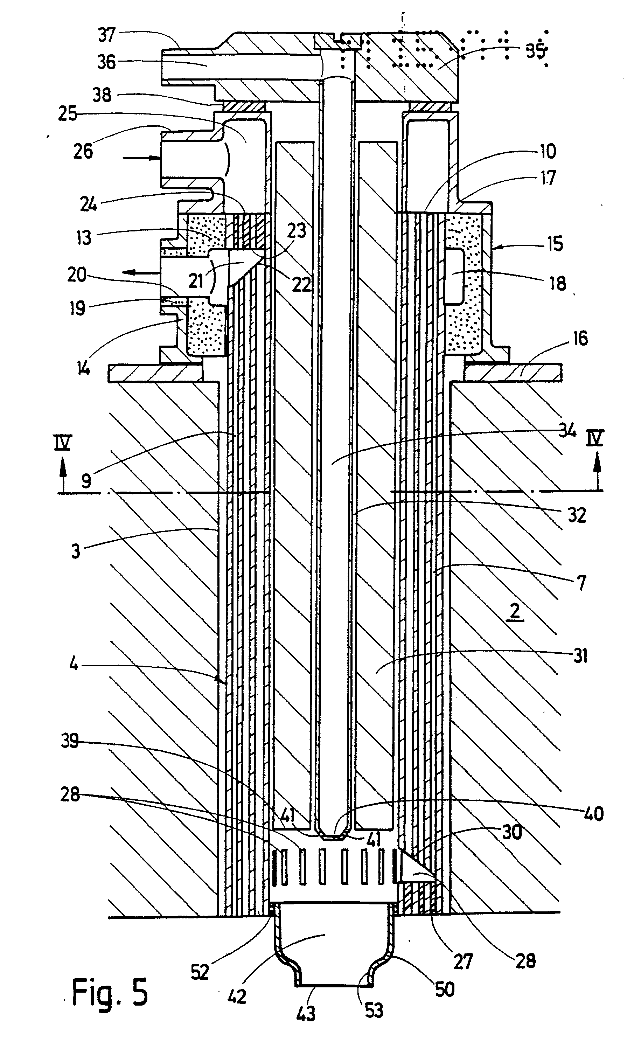

Die in Fig. 5 dargestellte Ausführungsform eines Industriebrenners ist weitgehend gleich aufgebaut wie die anhand der Fig. 1 bis 4 im Vorstehenden beschriebene Ausführungsform. Gleiche Teile sind deshalb mit gleichen Bezugszeichen versehen, wobei sich eine nochmalige Erläuterung erübrigt.

Während aber bei der Ausführungsform nach Fig. 1 die Brennkammer 42 seitlich unmittelbar von der Innenmantelwand des hohlzylindrischen Körpers 4 umschlossen ist, ist bei der Ausführungsform nach Fig. 5 ein eigenes die Brennkammer 42 enthaltenes topf- oder ringförmiges Brennkammerelement 50 vorgesehen, das aus einem geeigneten keramischen Material besteht und in den Hohlraum 6 des hohlzylindrischen Körpers 4 eingefügt ist. Das Brennkammerelement 50 kann dabei aus einem anderen, beispielsweise hochwertigeren und noch hitzebeständigeren Keramikmaterial bestehen wie der hohlzylindrische Körper 4. Es weist ein zylindrisches Wandungsteil 51 auf, mit dem es an der inneren Mantelwand 5 befestigt ist. Um das Auftreten von von unterschiedlichen Wärmeausdehnungskoeffizienten herrührenden Spannungen zu vermeiden und Herstellungstoleranzen auszugleichen, ist zwischen dem zylindrischen Wandungsteil 51 und der inneren Mantelwand 5 eine nachgiebige keramische Zwischenlage 52, beispielsweise aus eingestopften Mineralfasern vorhanden. Gasaustrittsseitig ist das Brennkammerelement 50 bei 53 zu der Strahldüse 43 verjüngt, um eine höhere Strahlgeschwindigkeit zu erzielen.

Auf der der Strahldüse 43 gegenüberliegenden Seite ist das Brennkammerelement 50 in der Regel offen, so daß die aus den Verbrennungsluft-Auslaßschlitzen 28 austretende Verbrennungsluft ungehindert in die Brennkammer 42 einströmen kann. Es sind aber auch Ausführungsformen denkbar, bei denen das Brennkammerelement 50 einlaßseitig eine Drosseleinrichtung, beispielsweise in Gestalt einer keramischen Lochplatte aufweist, die entsprechend bemessene und verteilte Lufteintrittskanäle enthält.

Auch bei dieser Ausführungsform wird in der Regel eine zweistufige Verbrennung vorgenommen; ein Teil der Verbrennungsluft führenden Kanäle 10 mündet deshalb in bereits beschriebener Weise in der Nähe der Strahldüse 42 in der Stirnfläche des hohlzylindrischen Körpers 4. Im übrigen kann das Brennkammerelement 50 auch ohne die Verjüngung bei 53 ausgebildet sein, wie es auch möglich ist, in das Brennkammerelement 50 gasaustrittsseitig eine keramische Lochplatte einzusetzen, um damit eine Strahlaufteilung zu erzielen.

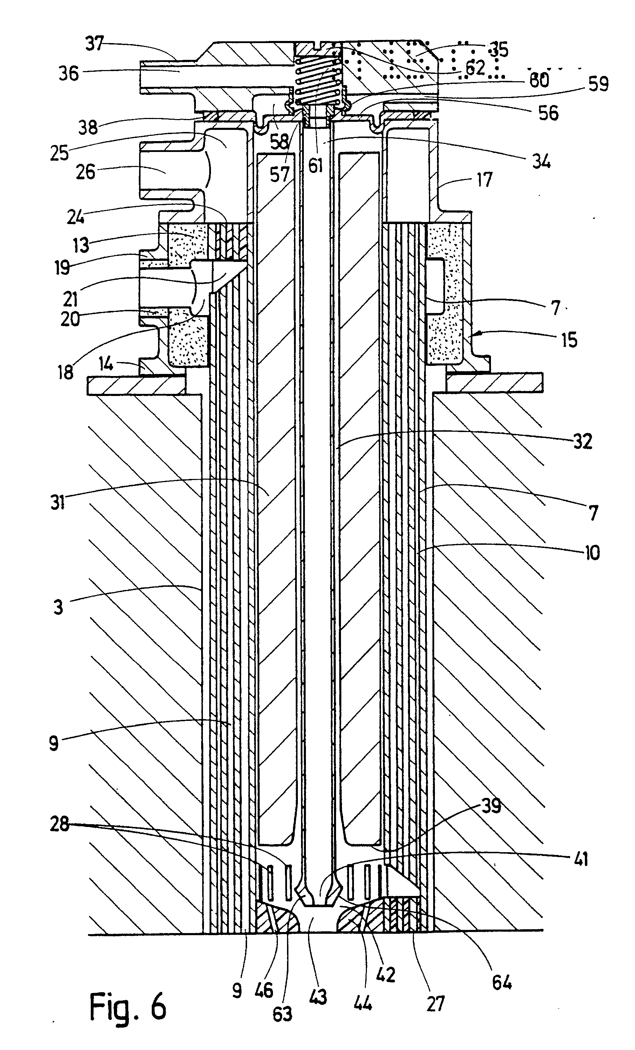

Die in Fig. 6 dargestellte dritte Ausführungsform eines neuen Industriebrenners entspricht ebenfalls weitgehend jener nach Fig. 1. Auch hier sind deshalb gleiche Teile mit gleichen Bezugszeichen versehen und nicht nochmals erläutert.

Während bei der Ausführungsform nach Fig. 1 die Brennstofflanze 34 starr mit der Kopfplatte 35 und damit mit dem Metallgehäuse 15 verbunden ist, ist bei der Ausführungsform nach Fig. 6 zwischen der Kopfplatte 35 und dem Metallgehäuse 15 eine bewegliche Membran 56 angeordnet, in die ein zentrisches Rohrstück 57 abgedichtet eingefügt ist, über das die Brennstofflanze 34 ebenfalls abgedichtet mit der Membran 56 verbunden ist. In dem Kopfstück 35 ist oberhalb der Membran 56 ein Raum 58 ausgebildet, der über einen Kanal 59 mit der Atmosphäre in Verbindung steht und gegen den über einen mit der Membran 56 und der Kopfplatte 35 verbundenen Balg 60 der über das Rohrstück 57 in die Brennstofflanze 34 führende Brennstoffzufuhrkanal abgedichtet ist. Eine in einer entsprechenden Bohrung der Kopfplatte 35 koaxial zu der Brennstofflanze 34 angeordnete Druckfeder 61, die einenends gegen einen ein Federwiderlager bildenden Stopfen 62 abgestützt ist, ist bestrebt, die Membran 56 und die Brennstofflanze 34 in Richtung auf die Strahldüse 43 zu drücken.

An ihrem in die Brennkammer 42 ragenden Ende ist die Brennstofflanze 34 mit einem Ventilkörper 63 verbunden, der eine kegelige Außenfläche 64 aufweist, die mit der innenliegenden, nach Art eines Ventilsitzes wirkenden Ringfläche des Düsenkörpers 44 zusammenwirkt. Zwischen dieser Ringfläche und der Außenfläche 64 ist ein Ringspalt begrenzt, dessen wirksamer Durchtrittsquerschnitt von der axialen Stellung des Ventilkörpers 63 und damit der Brennstofflanze 34 bezüglich des Düsenkörpers 44 abhängt.

Da die Membran durch den zwischen der Brennstofflanze 34 und der Wandung der Bohrung 32 frei bleibenden Spalt mit dem Druck in der Brennkammer 42 beaufschlagt ist und sie auf der anderen Seite unter der Wirkung der über den Stopfen 62 in ihrer Vorspannung einstellbaren Druckfeder 61 steht, wobei der Entlüftungskanal 59 eine unbehinderte Membranbewegung gewährleistet, kann der so aufgebaute Brenner in der Brennkammer 42 und in der Ofenkammer 1 auftretende Druckänderungen selbsttätig ausgleichen. Außerdem ist über den Stopfen 62 bei der Montage des Brenners eine jeweils optimale Strahleinstellung möglich.

Der keramische hohlzylindrische Körper 4 kann in einem für viele Industriebrenner ausreichenden Durchmesserbereich als einstückiges Strangpreßteil hergestellt werden. Ab einem gewissen Außendurchmesser wäre eine solche einstückige Herstellung aber unwirtschaftlich. Für solche Fälle kann der hohlzylindrische Körper 4a aus einzeln hergestellten Teilen zusammengesetzt werden, wie dies für ein Ausführungsbeispiel anhand von Fig. 7 veranschaulicht ist.

Wie aus einem Vergleich mit den Fig. 2 bis 4 zu ersehen, weist der hohlzylindrische Körper nach Fig. 7 die grundsätzlich gleiche sektorförmige Verteilung der Kanäle 9, 10 auf, die wiederum durch radiale Wände 11 und ringförmige Wände 12 voneinander getrennt sind. Die Anordnung ist aber derart getroffen, daß der hohlzylindrische Körper 4a aus einer Anzahl gleichartiger Hohlzylindersektoren 66 zusammengesetzt ist, die längs glatter radial verlaufender Trennflächen 67 aneinandergefügt und gegebenenfalls miteinander verkittet sind. Jeder der Hohlzylindersektoren 66 enthält wiederum drei sektorförmig verteilt angeordnete Kanäle 9 und 10, wobei in einem sektorförmigen Bereich, ähnlich wie bei den Fig. 2 bis 4, jeweils drei Kanäle 9 bzw. 10 radial nebeneinanderliegen.

Sowohl bei dieser Ausführungsform als auch bei den anderen beschriebenen Ausführungsformen des hohlzylindrischen Körpers kann ein Verbrennungsabgase oder Verbrennungsluft führenden Kanälen 9 bzw. 10 zugeordneter Sektorbereich naturgemäß mehr als drei Kanäle umfassen. Es ist auch möglich, daß in einem solchen Sektorbereich mehrere Kanäle 9 bzw. 10 in Umfangsrichtung nebeneinanderliegen, wie es auch denkbar ist, daß beispielsweise bei der Ausführungsform nach Fig. 7 benachbarte Hohlzylindersektoren 66 unterschiedlichen Medien zugeordnet sind.

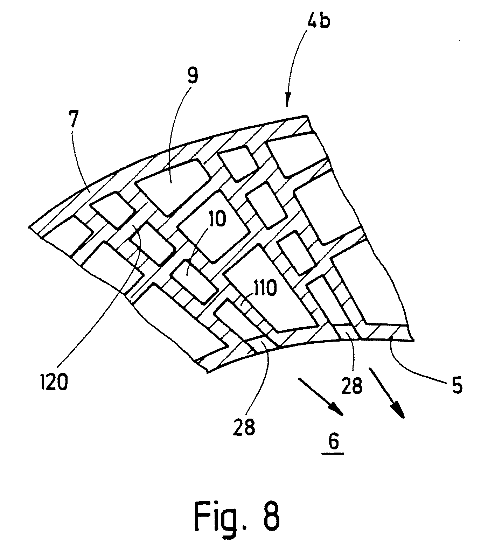

In Fig. 8 ist ein Ausschnitt einer weiteren abgewandelten Ausführungsform eines hohlzylindrischen Körpers 4b veranschaulicht. Die Seitenwände 110 der radial jeweils gruppenweise hintereinanderliegenden Kanäle 9 bzw. 10 folgen hier Sekanten zu der zylindrischen äußeren Mantelwand 7, während die Trennwände 120 zwischen benachbarten Kanälen 9 bzw. 10 einer Gruppe etwa rechtwinklig zu den Wänden 110 verlaufen. Auf diese Weise läßt sich erreichen, daß die Verbrennungsluft führenden Kanäle 10 über ihre Auslaßschlitze 28 in den von der inneren Mantelwand 5 umschlossenen Innenraum 6 derart tangential münden, daß sich eine Drallbewegung für die in die Brennkammer 42 einströmende Verbrennungsluft ergibt, die zu einer Verbesserung der Verbrennungsverhältnisse beitragen kann. Selbstverständlich sind auch bei dieser Ausführungsform die hydraulischen Durchmesser aller Kanäle 9 und aller Kanäle 10 unter sich jeweils gleich.

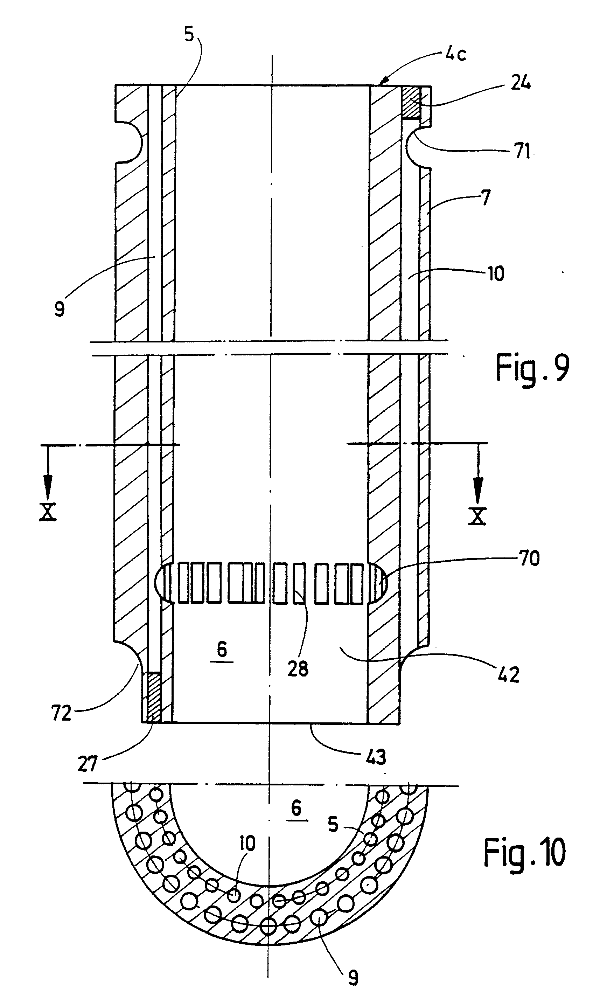

In den Fig. 9, 10 schließlich ist noch eine weitere Ausführungsform eines keramischen hohlzylindrischen Körpers 4c dargestellt, der ebenfalls im Strangpreßverfahren hergestellt ist. In diesem Falle sind die Kanäle 9, 10 in der Wandung des hohlzylindrischen Körpers 4c zylindrisch ausgebildet, wobei wiederum die Verbrennungsabgase führenden Kanäle 9 einen größeren Durchmesser aufweisen als die der Verbrennungsluft zugeordneten Kanäle 10, die radial innenliegend angeordnet sind. Um die Verbrennungsluft führenden Kanäle 10 zu der Brennkammer 42 hin zu öffnen, genügt es in diesem Falle, in die Innenmantelfläche 5 eine rings umlaufende, im Querschnitt beispielsweise halbkreisförmige Rille 70 einzuarbeiten, die die Kanäle 10 anschneidet, so daß diese wiederum über die Schlitze 28 münden.

In ähnlicher Weise ist zur seitlichen Abführung der Verbrennungsabgase in den Ringkanal 18 der Fig. 1 anderenends im Bereiche der Außenmantelfläche 7 eine ebenfalls im Querschnitt halbkreisförmige rings umlaufende Rille 71 eingearbeitet, die die stirnseitig bei 24 verschlossenen Kanäle 10 mit schlitzartigen seitlichen Eintrittsöffnungen versieht.

In diesem Falle ist der hohlzylindrische Körper 4c im Bereiche seiner Strahldüse 43 auf seiner Außenseite bei 72 ringsum zurückgesetzt, womit erreicht wird, daß die Einlässe für die Verbrennungsabgase in die Kanäle 9 axial gegenüber der Strahldüse 43 zurückgesetzt und gegen diese somit seitlich abgeschirmt sind. Die Strahldüse 43 selbst ist in diesem Falle unmittelbar durch die durchgehende zylindrische innere Mantelwand 5 des hohlzylindrischen Körpers 4c gebildet.

Eine solche Ausbildung der Strahldüse 43 ist naturgemäß auch bei den vorher beschriebenen anderen Ausführungsformen des hohlzylindrischen Körpers 4, 4a, 4b möglich, was in gleichem Maße auch für die Gestaltung des hohlzylindrischen Körpers bei 72 gilt.

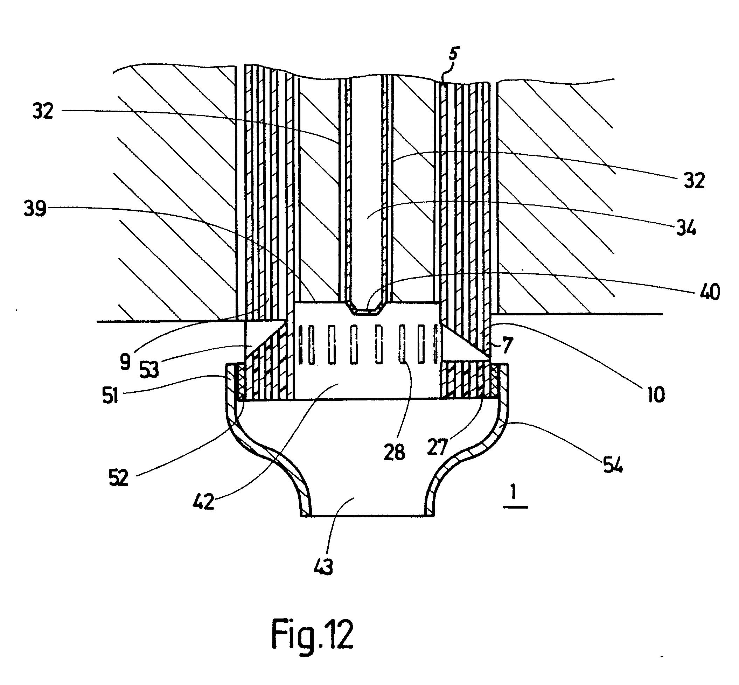

Der beispielsweise anhand von Fig. 1 beschriebene Industriebrenner ist in ein eigenes Metallgehäuse 15 eingesetzt, mittels dessen er an dem Außenmantel 16 des Industrieofens befestigt ist. Insbesondere in Fällen, in denen eine größere Heizleistung erforderlich ist als sie wirtschaftlich mit einem einzigen Brenner erzielt werden kann, kann es zweckmäßig sein, mehrere der beschriebenen Industriebrenner zu einer Brennereinheit zusammenzufassen, die dann ihrerseits als Einheit in den Industrieofen eingesetzt wird. Ein Beispiel dafür ist in Fig. 11 schematisch dargestellt.

In einem im Prinzip ähnlich wie das Metallgehäuse 15 der Fig. 1 gestalteten, gemeinsamen Metallgehäuse 150 sind nebeneinanderliegend drei Industriebrenner, beispielsweise nach Fig. 1, angeordnet, von denen lediglich ihre hohlzylindrischen Körper 4 veranschaulicht sind. Jedem dieser hohlzylindrischen Körper 4 sind in dem Metallgehäuse 150 entsprechende Zu- und Abführeinrichtungen für die Verbrennungsluft bzw. die Verbrennungsabgase zugeordnet. Die Ausbildung dieser Zu-und Abführeinrichtungen ergibt sich ohne weiteres aus Fig. 1, so daß eine nochmalige Beschreibung sich erübrigt.

Bei der schließlich in Fig. 12 noch dargestellten weiteren Ausführungsform eines neuen Industriebrenners sind wiederum gleiche Teile wie bei der Ausführungsform nach Fig. 1 mit gleichen Bezugszeichen versehen und nicht weiter erläutert.

Bei dieser Ausführungsform ist das topfförmige keramische Brennkammerelement 50 durch ein im Grundsatz ähnlich gestaltetes keramisches Brennkammerelement 54 ersetzt, das wiederum ein zylindrisches Wandungsteil 51 aufweist. Der Durchmesser des zylindrischen Wandungsteiles 51 ist aber in diesem Falle etwas größer als der Außendurchmesser der äußeren Mantelwand 7 des hohlzylindrischen Körpers 4 bemessen, wobei das Brennkammerelement 54 über die nachgiebige keramische Zwischenlage 52 bspw. aus eingestopften Mineralfasern nunmehr auf die äußere Mantelwand 7 des hohlzylindrischen Körpers 4 abgedichtet aufgesetzt ist.

Die die Verbrennungsabgase abführenden Kanäle 9 sind durch die äußere Mantelwand 7 durchdringende sektorförmige Schlitze 55 seitlich oberhalb des Brennkammerelementes 54 geöffnet und im Bereiche der benachbarten Stirnseite bei 27 verschlossen. Der Verbrennungsabgaseintritt in den den Rekuperator bildenden Teil des hohlzylindrischen Körpers 4 erfolgt somit seitlich, wozu zu bemerken ist, daß eine solche seitliche Verbrennungsabgas-Einführung auch bei den vorerwähnten Ausführungsformen des Industriebrenners möglich wäre.

Die Luftzufuhr in die Brennkammer 42 geschieht wiederum durch die die innere Mantelwand 5 durchdringenden Schlitze 28. Alternativ wären auch Ausführungsformen denkbar, bei denen anstelle dieser radialen Auslaßschlitze 28 auch ein stirnseitiger Verbrennungslufteintritt in das Brennkammerelement 54 denkbar wäre, in dem der stirnseitige Verschluß der Kanäle 10 bei 27 entsprechend weggelassen wird. Auch eine kombinierte Verbrennungsluftzufuhr über gemäß Fig. 12 angeordnete radiale Schlitze 28 und stirnseitig - bei 27 - offengebliebene Kanäle 10 ist vorstellbar.

**Patentansprüche**

1. Industriebrenner mit rekuperativer Luftvorwärmung, insbesondere zur Beheizung von Ofenräumen (1) von Industrieöfen, mit einer keramischen Brennkammer (42), der eine koaxiale Brennstoffzuführleitung und eine Luftzuführung zugeordnet und die gasaustrittsseitig mit einer Strahldüse (43) ausgebildet oder verbunden ist sowie mit einem koaxial zu der Brennkammer angeordneten, in Gestalt eines im wesentlichen hohlzylindrischen Körpers ausgebildeten Rekuperator, in dessen Wand rings um die Längsachse (8) verteilt nebeneinanderliegende, längs verlaufende Kanäle (9, 10) angeordnet sind, die im Gegenstrom von Verbrennungsabgasen und Verbrennungsluft durchströmt und die über dazwischenliegende Wandteile (11, 12) thermisch miteinander gekoppelt sind, wobei zumindest ein Teil der von einer Verbrennungsluftzuführeinrichtung ausgehenden, Verbrennungsluft führenden Kanäle mit der Brennkammer in Verbindung steht, dadurch gekennzeichnet, daß der hohlzylindrische Körper (4) aus keramischem Werkstoff besteht und mit einer inneren Mantelwand (5) einen zylindrischen Hohlraum (6) umschließt, daß die Brennkammer (42) als Abschnitt des zylindrischen Hohlraumes von der inneren Mantelwand seitlich begrenzt ist und daß die Strahldüse (43) durch die Innenwand gebildet oder in einem keramischen Düsenkörper (44) ausgebildet ist, der mit dem hohlzylindrischen Körper verbunden ist. (Fig.1,9)

2. Industriebrenner mit rekuperativer Luftvorwärmung, insbesondere zur Beheizung von Ofenräumen (1) von Industrieöfen, mit einer keramischen Brennkammer (42), der eine koaxiale Brennstoffzuführleitung und eine Luftzuführung zugeordnet und die gasaustrittsseitig mit einer Strahldüse (43) ausgebildet oder verbunden ist sowie mit einem koaxial zu der Brennkammer angeordneten, in Gestalt eines im wesentlichen hohlzylindrischen Körpers ausgebildeten Rekuperator,in dessen Wand rings um die Längsachse (8) verteilt nebeneinanderliegende, längs verlaufende Kanäle. (9, 10) angeordnet sind, die im Gegenstrom von Verbrennungsabgasen und Verbrennungsluft durchströmt und die über dazwischenliegende Wandteile (11, 12) thermisch miteinander gekoppelt sind, wobei zumindest ein Teil der von einer Verbrennungsluftzuführeinrichtung ausgehenden, Verbrennungsluft führenden Kanäle mit der Brennkammer in Verbindung steht, dadurch gekennzeichnet, daß der hohlzylindrische Körper (4) aus keramischem Werkstoff besteht und mit einer inneren Mantelwand (5) einen zylindrischen Hohlraum (6) umschließt, daß die Brennkammer (42) aus einem topf- oder ringförmigen Brennerkammerelement (50) aus Keramik besteht, welches sich gasaustrittsseitig zu der Strahldüse (43) verjüngt und unter Einfügung in den zylindrischen Hohlraum (6) an die innere Mantelwand (5) angesetzt eingefügt (Fig. 5) oder auf die äußere Mantelwand (7) des hohlzylindrischen Körpers (4) aufgesetzt ist (Fig. 12).

3. Industriebrenner nach Anspruch 2, dadurch gekennzeichnet, daß das Brennkammerelement (50) aus einem anderen Keramikmaterial besteht wie der hohlzylindrische Körper (4, 4a, 4b, 4c).

4. Industriebrenner nach Anspruch 2 oder 3, dadurch gekennzeichnet, daß die Strahldüse (43) an dem Brennkammerelement (50) ausgebildet oder mit diesem verbunden ist.

5. Industriebrenner nach Anspruch 1, dadurch gekennzeichnet, daß der Düsenkörper (44) in den Hohlraum eingesetzt und mit der Innenwand verbunden ist.

6. Industriebrenner nach Anspruch 1, dadurch gekennzeichnet, daß der Düsenkörper als ein in den Hohlraum (6) eingesetzter Düsenring (44) ausgebildet ist, dessen wirksame Gasdurchtrittsfläche kleiner als die des Hohlraums (6) ist.

7. Industriebrenner nach Anspruch 1, dadurch gekennzeichnet, daß der Düsenkörper (44) mehrere getrennte Düsenöffnungen (46) aufweist.

8. Industriebrenner nach einem der vorhergehenden Ansprüche, dadurch gekennzeichnet, daß Verbrennungsluft führende Kanäle (10) mit in der Nähe der Strahldüse (43) liegenden Restluftauslässen (100) verbunden sind.

9. Industriebrenner nach Anspruch 8, dadurch gekennzeichnet, daß Restluftauslässe (100) im Bereiche der zugeordneten Stirnseite des hohlzylindrischen Körpers (4, 4a, 4b, 4c) liegen.

10. Industriebrenner nach einem der vorhergehenden Ansprüche, dadurch gekennzeichnet, daß die Brennkammer (42) auf der der Strahldüse (43) abgewandten Stirnseite durch wenigstens ein in den Hohlraum (6) eingesetztes Verschlußteil (31) abgeschlossen ist, das Einrichtungen (32, 34) zumindest für die Brennstoffzufuhr aufweist.

11. Industriebrenner nach einem der vorhergehenden Ansprüche, dadurch gekennzeichnet, daß zumindest die Verbrennungsabgase und die Verbrennungsluft führenden Kanäle (9; 10) in abwechselnd nebeneinanderliegenden Sektoren des hohlzylindrischen Körpers (4, 4a, 4b, 4c) verlaufend angeordnet sind.

12. Industriebrenner nach einem der vorhergehenden Ansprüche, dadurch gekennzeichnet, daß alle Verbrennungsabgase und alle Verbrennungsluft führenden Kanäle (9; 10) jeweils gleichen hydraulischen Durchmesser ($d_n$) aufweisen, der in dem Bereich von 2 bis 10 mm liegt.

13. Industriebrenner nach Anspruch 11, dadurch gekennzeichnet, daß der hohlzylindrische Körper (4a) aus wenigstens zwei gleichartigen Hohlzylindersektoren (66) zusammengesetzt ist.

14. Industriebrenner nach einem der vorhergehenden Ansprüche, dadurch gekennzeichnet, daß der hohlzylindrische Körper (4, 4a, 4b, 4c) in ein teilbares Gehäuse (15) eingesetzt ist, das mit den jeweiligen Kanälen (9,10) in Verbindung stehende Anschlußeinrichtungen (18,19; 25,26) aufweist und aus dem der hohlzylindrische Körper in einer von der Strahldüse (43) wegweisenden Richtung herausnehmbar ist.

15. Industriebrenner nach Anspruch 14, dadurch gekennzeichnet, daß er mit wenigstens einem zweiten Brenner zu einer Brennereinheit zusammengefaßt ist (Fig. 11), deren hohlzylindrische Körper (4) in einem gemeinsamen Gehäuse (150) angeordnet sind.

16. Industriebrenner nach einem der vorhergehenden Ansprüche, dadurch gekennzeichnet, daß die Brennstoffzuführungsleitung in dem Hohlraum (6) ein axial verschiebbares Zufuhrelement (34) aufweist, durch das zusammen mit der Strahldüse (43) oder Ventilsitzmitteln (44) ein verstellbares Ventil für die in die Strahldüse (43) einströmenden Gase gebildet ist und daß das Zuführelement (34) mit einer Feder-Membrananordnung (59, 61) verbunden ist, durch deren Federmittel (61) das Zuführelement (34) auf die Strahldüse (43) bzw. die Ventilsitzmittel (44) hin vorgespannt ist und daß die Membran (56) einerseits mit der Atmosphäre und andererseits mit der Brennkammer (42) in Verbindung steht.

17. Industriebrenner nach einem der vorhergehenden Ansprüche, dadurch gekennzeichnet, daß der hohlzylindrische Körper (4, 4a, 4b, 4c) oder dessen Teile (66) stranggepreßt sind.

18. Industriebrenner nach einem der vorhergehenden Ansprüche, dadurch gekennzeichnet, daß die Verbrennungsluft führenden Kanäle (9) in einer eine Drallbewegung der Verbrennungsluft in der Brennkammer (42) ergebenden Richtung in den Hohlraum (6) mündend angeordnet sind.

## Claims

1. An industrial burner with recuperative air preheating, more particularly for heating furnace chambers (1) of industrial furnaces, having: a ceramic combustion chamber (42) with which a coaxial fuel supply line and an air supply line are associated and which on the gas outlet side is constructed with or connected to a discharge nozzle (43); and a recuperator which is disposed coaxially with the combustion chamber and is constructed in the form of a substantially hollow cylindrical body in whose wall longitudinally extending channels (9, 10) are disposed which are distributed one beside the other in a circle around the longitudinal axis (8) and through which combustion waste gases and combustion air flow and which are thermally interconnected via intermediate wall portions (11, 12), at least some of the channels extending from a combustion air supply device and carrying combustion air being connected to the combustion chamber, characterized in that the hollow cylindrical body (4) is made of a ceramic material and encloses a cylindrical cavity (6) by an inner jacket wall (5); the combustion chamber (42) is bounded laterally as a portion of the cylindrical cavity by the inner jacket wall; and the discharge nozzle (43) is formed by the inner wall or constructed in a ceramic nozzle body (44) which is connected to the hollow cylindrical body. (Figs. 1, 9)

2. An industrial burner with recuperative air preheating, more particularly for heating furnace chambers (1) of industrial furnaces, having: a ceramic combustion chamber (42) with which a coaxial fuel supply line and an air supply line are associated and which on the gas outlet side is constructed with or connected to a discharge nozzle (43); and a recuperator wish is disposed coaxially with the combustion chamber and is constructed in the form of a substantially hollow cylindrical body in whose wall longitudinally extending channels (9, 10) are disposed which are distributed one beside the other in a circle around the longitudinal axis (8) and through which combustion waste gases and combustion air flow and which are thermally interconnected via intermediate wall portions (11, 12), at least some of the channels extending from a combustion air supply device and carrying combustion air being connected to the combustion chamber, characterized in that the hollow cylindrical body (4) is made of a ceramic material and encloses a cylindrical cavity (6) by an inner jacket wall (5) and the combustion chamber (42) comprises a dish-shaped or annular ceramic combustion chamber element (50) which on the gas outlet side tapers in the direction of the discharge nozzle (43) and is inserted into the cylindrical cavity (6) attached to the inner jacket wall (5) (Fig. 5) or placed on the outer jacket wall (7) of the hollow cylindrical member (4). (Fig. 12)

3. An industrial burner according to claim 2, characterized in that the combustion chamber element (50) is made from a different ceramic material than the hollow cylindrical body (4, 4a, 4b, 4c).

4. An industrial burner according to claims 2 or 3, characterized in that the discharge nozzle (43) is constructed on the combustion chamber element (50) or connected thereto.

5. An industrial burner according to claim 1, characterized in that the nozzle body (44) is inserted into the cavity and connected to the inner wall.

6. An industrial burner according to claim 1, characterized in that the nozzle body is constructed in the form of a nozzle ring (44) which is inserted into the cavity (6) and whose operative gas passage surface is smaller than that of the cavity (6).

7. An industrial burner according to claim 1, characterized in that the nozzle body (44) has a number of separate nozzle apertures (46).

8. An industrial burner according to one of the preceding claims, characterized in that channels (10) carrying combustion air are connected to residual air outlets (100) disposed adjacent the discharge nozzle (43).

9. An industrial burner according to claim 8, characterized in that residual air outlets (100) are disposed in the zone of the associated end face of the hollow cylindrical body (4, 4a, 4b, 4c).

10. An industrial burner according to one of the preceding claims, characterized in that at the end face remote from the discharge nozzle (43) the combustion chamber (42) is closed by at least one closure member (31) which is inserted into the cavity (6) and has devices (32, 33) at least for the fuel supply.

11. An industrial burner according to one of the preceding claims, characterized in that at least the channels (9; 10) carrying the combustion waste gases and the combustion air are disposed extending in sectors of the hollow cylindrical body (4, 4a, 4b, 4c) disposed alternately one beside the other.

12. An industrial burner according to one of the preceding claims, characterized in that all the channels (9; 10) carrying combustion waste gases and all the channels carrying combustion air each have the same hydraulic diameter ($d_n$), which is in the range of 2 to 10 mm.

13. An industrial burner according to claim 11, characterized in that the hollow cylindrical body (4a) is made up by at least two identical hollow cylinder sectors (66).

14. An industrial burner according to one of the preceding claims, characterized in that the hollow cylindrical body (4, 4a, 4b, 4c) is inserted into a dividable casing (15) which has connection devices (18, 19; 25, 26) connected to the particular channels (9, 10) and from which the hollow cylindrical body can be removed in a direction pointing away from the discharge nozzle (43).

15. An industrial burner according to claim 14, characterized in that it is combined with at least a second burner to form a burner unit (Fig. 11) whose hollow cylindrical bodies (4) are disposed in a common casing (150).

16. An industrial burner according to one of the preceding claims, characterized in that the fuel supply line has in the cavity (6) an axially displaceable supply element (34) by which, together with the discharge nozzle (43) or valve seat means (44), an adjustable valve is formed for the gases flowing into the discharge nozzle (43); the supply element (34) is connected to a spring/membrane arrangement (59, 61) by whose spring means (61) the supply element (34) is prestressed in the direction of the discharge nozzle (43) and the valve seat means (44); and the membrane (56) is connected on the one hand to atmosphere and on the other hand to the combustion chamber (42).

17. An industrial burner according to one of the preceding claims, characterized in that the hollow cylindrical member (4, 4a, 4b, 4c) or its parts (66) are extruded.

18. An industrial burner according to one of the preceding claims, characterized in that the channels (9) carrying the combustion air are disposed to discharge into the cavity (6) in a direction producing a twisting movement of the combustion air in the combustion chamber (42).

**Revendications**

1. Brûleur industriel muni d'un réchauffage de l'air par récupération, notamment pour le chauffage d'enceintes (1) de fours industriels comportant une chambre de combustion (42) en céramique, a laquelle sont associés un conduit d'amenée de combustible coaxial et une arrivée d'air et qui est aménagée en ou est reliée à une tuyère (43) côté sortie des gaz, ainsi qu'un récupérateur, coaxial à la chambre de combustion, se présentant sous la forme d'un élément essentiellement cylindrique creux, dans la paroi duquel sont aménagés des conduits (9, 10) axiaux disposés côte à côte tout autour de l'axe longitudinal (8), qui sont parcourus à contre-courant par les gaz de combustion et l'air de combustion et qui sont couplés thermiquement entre eux par des éléments de paroi (11, 12), au moins une partie des conduits véhiculant l'air de combustion s'étendant à partir d'un dispositf d'amenée d'air de combustion étant en communication avec la chambre de combustion, caractérisé en ce que l'élément cylindrique creux (4) est réalisé en matériau céramique et entoure par une paroi intérieure (5) une cavité (6) cylindrique, en ce que la chambre de combustion (42) en tant que partie de la cavité cylindrique est délimitée latéralement par la paroi intérieure et en ce que la tuyère (43) est formée par la paroi intérieure ou est réalisée dans un élément de tuyère (44) en céramique qui est relié à l'élément cylindrique creux. (Figures 1, 9).

2. Brûleur industriel muni d'un réchauffage de l'air par récupération, notamment pour le chauffage d'enceintes (1) de fours industriels, comportant une chambre de combustion (42) en céramique, à laquelle sont associés un conduit d'amenée de combustible coaxial et une amenée d'air et qui est aménagée en ou est reliée à une tuyère (43) côté sortie des gaz, ainsi qu'un récupérateur, coaxial à la chambre de combustion se présentant sous la forme d'un élément essentiellement cylindrique creux, dans la paroi duquel des conduits (9, 10) axiaux sont disposés côte à côte tout autour de l'axe longitudinal (8), qui sont parcourus à contre-courant par les gaz de combustion et l'air de combustion et qui sont couplés thermiquement entre eux par des éléments de paroi (11, 12), une partie au moins des conduits véhiculant l'air de combustion s'étendant à partir d'un dispositif d'amenée d'air de combustion étant en communication avec la chambre de combustion, caractérisé en ce que l'élément cylindrique creux (4) est réalisé en matériau céramique et entoure par une paroi intérieure (5) une cavité (6) cylindrique, en ce que la chambre de combustion (42) se compose d'un élément de chambre de combustion (50) en céramique en forme de cuvette ou d'anneau, qui se rétrécit côté sortie de gaz en direction de la tuyère (43) et qui est monté par emboîtement dans la cavité (6) cylindrique contre la paroi intérieure (5) (Figure 5) ou est monté sur la paroi extérieure (7) de l'élément cylindrique creux (4) (Figure 12).

3. Brûleur industriel selon la revendication 2, caractérisé en ce que l'élément de chambre de combustion (50) se compose d'un matériau céramique différent de celui de l'élément cylindrique creux (4, 4a, 4b, 4c).

4. Brûleur industriel selon la revendication 2 ou 3, caractérisé en ce que la tuyère (43) est réalisée sur l'élément de chambre de combustion (50) ou est reliée à celui ci.

5. Brûleur industriel selon la revendication 1, caractérisé en ce que l'élément de tuyère (44) est monté à l'intérieur de la cavité et est relié à la paroi intérieure.

6. Brûleur industriel selon la revendication 1, caractérisé en ce que l'élément de tuyère est réalisé sous forme d'anneau de tuyère (44) monté dans la cavité (6) dont la section de sortie de gaz efficace est inférieure à celle de la cavité (6).

7. Brûleur industriel selon la revendication 1, caractérisé en ce que l'élément de tuyère (44) présente plusieurs ouvertures de tuyère (46) séparées.

8. Brûleur industriel selon l'une des revendications précédentes, caractérisé en ce que les conduits (10) véhiculant l'air de combustion sont reliés à des sorties d'air secondaires (100) situées à proximité de la tuyère (43).

9. Brûleur industriel selon la revendication 1, caractérisé en ce que des sorties d'air secondaire (100) sont situées dans la zone de l'extrémité frontale correspondante de l'élément cylindrique creux (4, 4a, 4b, 4c).

10. Brûleur industriel selon l'une des revendications précédentes, caractérisé en ce que la chambre de combustion (42) est fermée du côté opposé à la tuyère (43) par au moins un élément d'obturation (31) monté dans la cavité (6), qui comporte des dispositifs (32, 34) pour au moins l'amenée de combustible.

11. Brûleur industriel selon l'une des revendications précédentes, caractérisé en ce qu'au moins les conduits (9, 10) véhiculant les gaz de combustion et l'air de combustion sont disposés côte à côte en secteurs alternés de l'élément cylindrique creux (4, 4a, 4b, 4c).

12. Brûleur industriel selon l'une des revendications précédentes, caractérisé en ce que tous les conduits véhiculant les gaz de combustion et tous les conduits véhiculant l'air de combustion (9 ; 10) ont respectivement le même diamètre hydraulique (dn) qui est compris entre 2 et 10 mm.

13. Brûleur industriel selon la revendication 11, caractérisé en ce que l'élément cylindrique creux (4a) se compose d'au moins deux secteurs de cylindre creux (66) identiques.

14. Brûleur industriel selon l'une des revendications précédentes, caractérisé en ce que l'élément cylindrique creux (4, 4a, 4b, 4c) est monté dans un corps (15) en plusieurs parties qui comporte des dispositifs de raccordement (18, 19 ; 25, 26) communiquant avec les conduits (9, 10) correspondants et duquel l'élément cylindrique creux peut être extrait dans une direction opposée à la tuyère (43).

15. Brûleur industriel selon la revendication 14, caractérisé en ce qu'il est combiné à au moins un deuxième brûleur pour former une unité de brûleurs (Figure 11) dont les éléments cylindriques creux (4) sont disposés dans un corps (150) commun.

16. Brûleur industriel selon l'une des revendications précédentes, caractérisé en ce que la conduite d'amenée de combustible comporte un élément d'amenée (34) pouvant se déplacer axialement à l'intérieur de la cavité (6) qui forme avec la tuyère (43) ou des moyens de siège de soupape (44) une soupape réglable pour les gaz entrant dans la tuyère (43) et en ce que l'élément d'amenée (34) est relié à un dispositif ressort-membrane (59, 61) dont les moyens de ressort (61) appliquent une précontrainte sur l'élément d'amenée (34) en direction de la tuyère (43) ou des moyens de siège de soupape (44) et en ce que la membrane (56) est reliée d'une part à l'atmosphère et d'autre part à la chambre de combustion (42).

17. Brûleur industriel selon l'une des revendications précédentes, caractérisé en ce que l'élément cylindrique creux (4, 4a, 4b, 4c) ou ses éléments (66) sont obtenus par filage à chaud.

18. Brûleur industriel selon l'une des revendications précédentes, caractérisé en ce que les conduits (9) véhiculant l'air de combustion débouchent dans la cavité (6) dans une direction engendrant un mouvement de rotation de l'air de combustion dans la chambre de combustion (42).

Fig.1

Fig. 2

Fig. 3

Fig. 4

Fig. 5

Fig. 6

## Fig. 7

## Fig. 11

Fig. 8

Fig. 9

Fig. 10

Fig.12

EP 0 324 043 B1